(19) Europäisches Patentamt
European Patent Office
Office européen des brevets

(11) **EP 1 995 940 B1**

(12) **EUROPEAN PATENT SPECIFICATION**

(45) Date of publication and mention
of the grant of the patent:
**07.09.2011  Bulletin 2011/36**

(51) Int Cl.:
***H04M 9/08*** *(2006.01)*

(21) Application number: **07010160.5**

(22) Date of filing: **22.05.2007**

(54) **Method and apparatus for processing at least two microphone signals to provide an output signal with reduced interference**

Verfahren und Vorrichtung zur Verarbeitung mindestens zweier Mikrofonsignale zur Sendung eines Ausgangssignals mit reduzierter Interferenz

Procédé et appareil de traitement d'au moins deux signaux de microphone pour fournir un signal de sortie avec une réduction des interférences

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**26.11.2008  Bulletin 2008/48**

(73) Proprietor: **Harman Becker Automotive Systems GmbH**
**76307 Karlsbad (DE)**

(72) Inventors:
• **Wolff, Tobias**
**89073 Ulm (DE)**
• **Buck, Markus**
**88400 Biberach (DE)**

(74) Representative: **Grünecker, Kinkeldey, Stockmair & Schwanhäusser Anwaltssozietät**
**Leopoldstrasse 4**
**80802 München (DE)**

(56) References cited:
**EP-A- 1 633 121     US-A1- 2005 047 611**

• **HERBORDT W ET AL: "Computationally Efficient Frequency-Domain Combination of Acoustic Echo Cancellation and Robust Adaptive Beamforming" EUROSPEECH 2001, vol. 2, 2001, page 1001, XP007004503**
• **OSAMU HOSHUYAMA ET AL: "A Robust Adaptive Beamformer for Microphone Arrays with a Blocking Matrix Using Constrained Adaptive Filters" IEEE TRANSACTIONS ON SIGNAL PROCESSING, IEEE SERVICE CENTER, NEW YORK, NY, US, vol. 47, no. 10, October 1999 (1999-10), XP011058725 ISSN: 1053-587X**

**Description**

This invention is directed to a method and an apparatus for processing at least two microphone signals to provide an output signal with reduced interference, each microphone signal comprising a wanted signal component and an echo signal component resulting from at least one echo source, each microphone signal stemming from a microphone.

When information is submitted via communication media, it is desirable that the receiver obtains a copy of the original signal which is as exact as possible. One particular example for this situation is the case when a human speaker uses a mobile telephone to talk to another speaker, where a lot of interfering sound from the environment of the speaker may be submitted to the receiver as well. Interferences may comprise unknown signals as well as interfering sound which is explicitly known in the environment of the speaker. Interfering sound may be known in the case when the speaker uses a hands-free telephone kit and the voice of the remote partner is emitted by a loudspeaker in the vicinity of the speaker. In such a case, there are particular possibilities of improving the received speech signal.

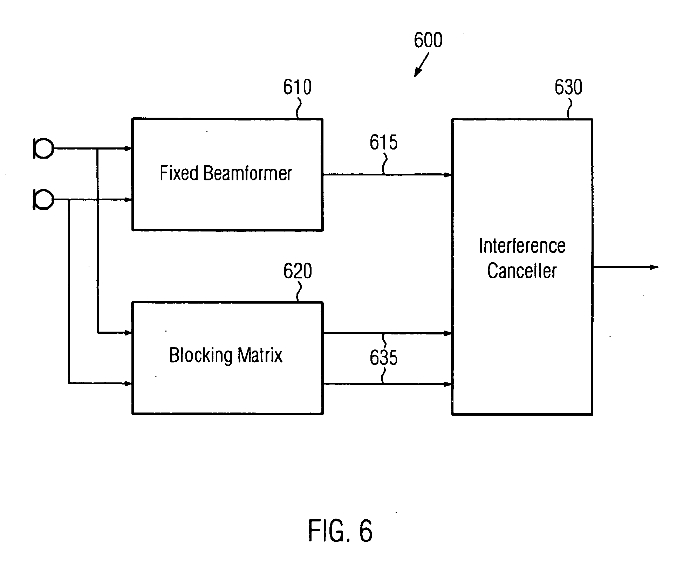

As a known solution to the problem of providing a method for reducing interference in signals received by microphones, a so-called "Generalized Sidelobe Canceller" (GSC) 600 has been used as depicted in an example in Figure 6. Such a device, in principle, comprises the components of a beamformer 610, a blocking matrix 620 and an interference canceller 630. In the beamformer, usually several microphones arranged as a microphone array are used to exploit the spatial properties of the sound field around the speaker. A multi-channel signal processing algorithm has the task to influence the directional characteristic of the microphone array so as to reduce all signals which are different from the wanted signal (beamforming).

However, the case that sound signals arrive at the microphones only from one direction is usually not realized. Due to reflections and the acoustic properties of the room, components of the sound signal are received by the array from different directions and thus spoil the blocking of the wanted signal. These components would, in general, become part of the power minimization in the interference canceller **630** and thus deteriorate quality in the output of the General Sidelobe Canceller **600.** This effect also leads to an attenuation of the wanted signal if the position of the speaker in not exactly known.

Both problems of an unknown speaker's position and reflections are therefore important for the practical use of the GSC structure. To solve these problems, Brandstein and Ward (M. Brandstein, D. Ward: Microphone arrays: signal processing techniques and applications, Springer Verlag, Berlin (Germany), 2001) propose to employ adaptive filters for the purpose of blocking the wanted signal. By using adaptive filters, components of the speech signal which are received with delay due to reflections can be simulated as well, resulting in a more efficient blocking of the wanted signal. Additionally, the speaker's exact position need not be known.

In a GSC structure, the processes of optimizing the speech signal and taking into account a minimizing condition are separated (cf. N. Dal Degan, C. Prati: Acoustic noise analysis and speech enhancement techniques for mobile radio applications, Signal Processing, Vol. 15, pp. 43-56, 1988). In the GSC structure **600,** a beamformer **610,** which may be implemented according to the "Delay and Sum" method (as described by Brandstein and Ward, see quotation above, and in: L. Griffiths, Ch. Jim: An alternative approach to linearly constrained adaptive beamforming, IEEE Trans. on Antennas and Propagation, Vol. 30, No. 1, pp. 27-34, January 1982) generates a signal in line **615** which already shows a reduced interference power in comparison to the original microphone signals. In the parallel branch of processing, the blocking matrix **620** generates signals in lines **635** which ideally do not show any components of the wanted signal. From these signals, the interference canceller **630** constructs an estimate for interferences in the output of the beamformer **610** based on the signals from the blocking matrix **620** and subtracts this estimate from the beamformer output.

As only signal components are subtracted from the output of the time-invariant beamformer **610** which are also present in the excitation signal in line **635** of the interference canceller **630,** minimizing the power of interferences may be accomplished without constraint by appropriate algorithms like the NLMS-Algorithm or Affine Projection (cf. S. Haykin: Adaptive filter theory, Prentice Hall, Upper Saddle River NJ (USA), 2002, and: E. Hänsler: Statistische Signale, Springer Verlag Berlin (Germany), 2001).

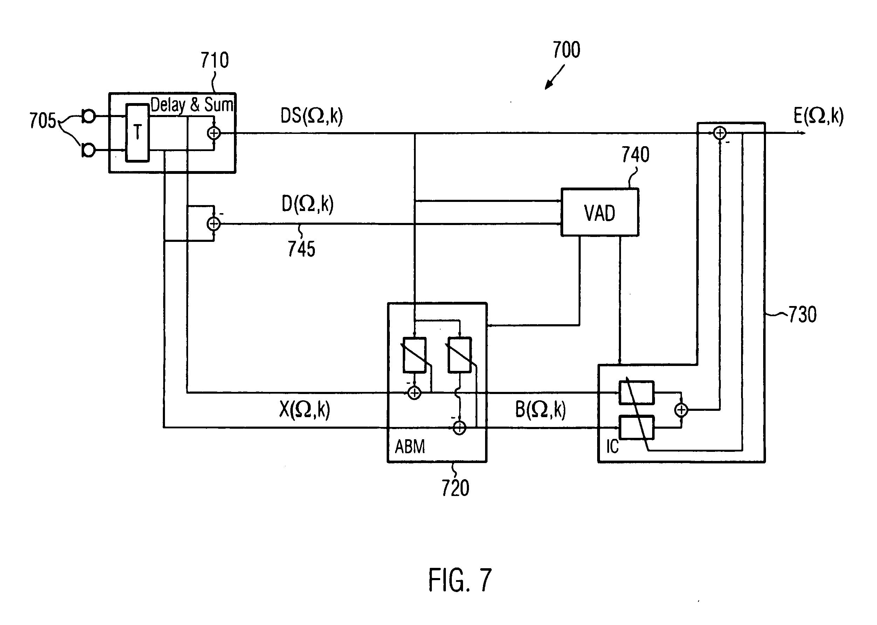

The technical design of an example of a prior art GSC system with adaptive filters is shown in Figure 7. Therein, the beamformer **710** receives the output signals from the microphones **705,** subjects them to a time shift to account for a preferred direction and combines them into one output signal $DS(\Omega,k)$ which then serves as input signal for the interference canceller **730.** The shifted signals $X(\Omega,k)$ from the individual microphones are used as input signals for an adaptive blocking matrix **720.** The adaptive blocking matrix **720** receives the combined output signal $DS(\Omega,k)$ of the beamformer as reference signal and blocks this signal in the signals $X(\Omega,k)$ from the individual microphones. The resulting signals $B(\Omega,k)$ are forwarded to the adaptive interference canceller **730** as excitation signals. The process of adaptation of the adaptive blocking matrix and the adaptive interference canceller is controlled by a voice activity detector **740** which receives as input signals the combined output signal $DS(\Omega,k)$ of the beamfomer and in line **745** a noise signal $D(\Omega,k)$ derived from the signals of the individual microphones.

The document EP 1 633 121 A1 discloses speech signal processing with combined adaptive noise reduction and adaptive echo compensation.

The document: W.Herbordt, H.Buchner, W. Kellermann: "Computationally Efficient Frequency-Domain Combination of Acoustic Echo Cancellation and Robust Adaptive Beamforming", Eurospeech 2001, vol. 2, page 1001, devices a new structure for combining acoustic echo cancellation and Generalized Sidelobe Cancellers.

The document: O. Hoshuyama, A. Sugiyama, A. Hirano: "A Robust Adaptive Beamformer for Microphone Arrays with a Blocking Matrix Using Constrained Adaptive Filters", IEEE Transactions on Signal Processing, IEEE Service Center, New York, US, vol. 47, no. 10, October 1999, proposes a new robust adaptive beamformer applicable to microphone arrays.

Document US 2005/0047611 A1 teaches an audio input system providing a method for reducing noise associated with an audio signal received through a microphone sensor array.

However, the method of reducing interference with a GSC system has some drawbacks. Particularly, the process of adapting the filters to the wanted signal may be disturbed by the presence of echo signals. Such echo signals are emitted by one or more echo sources. In a special case, an echo signal may be a speech signal, and an echo source may be a loudspeaker emitting a speech signal. Furthermore, an echo signal may appear as wanted sound signal to the voice activity detector 740 and thus confuse controlling of the adaptation process of the adaptive filters. The voice activity detector might erroneously identify the voice activity of a second speaker or a loudspeaker in the background as signal from a preferred speaker and lead the adaptation away from the preferred speaker.

So, the problem underlying the invention is providing a method for processing at least two microphone signals to provide an output signal with reduced interference which provides a better removal of interferences by employing an improved process of adaptation to the wanted sound signal.

This problem is solved by the method according to claim 1 and the apparatus according to claim 23 of the present invention. Particularly, the invention provides a method for processing at least two microphone signals to provide an output signal with reduced interference, each microphone signal comprising a wanted signal component and an echo signal component resulting from at least one echo source, each microphone signal stemming from a microphone, the method comprising the steps of:

(a) receiving the at least two microphone signals,

(b) determining an echo signal estimate,

(c) determining an intermediate signal based on at least one microphone signal,

(d) determining an echo-reduced signal as a difference signal of the echo signal estimate and the intermediate signal,

(e) determining an interference signal for at least one microphone as a difference signal based on the echo-reduced signal and the microphone signal, and

(f) determining an output signal with reduced interference based on the at least one interference signal and the intermediate signal.

In a preferred configuration, the signals from all of the at least two microphones may be used to determine the intermediate signal in step (c), and for all of the at least two microphones, an interference signal may be determined in step (e). In this particular case, step (c) may be formulated as: "Determining an intermediate signal based on the at least two microphone signals", and the corresponding step (e) would read "Determining an interference signal for each of the at least two microphones as a difference signal based on the echo-reduced signal and the microphone signal".

In another preferred configuration, part of the microphones may be used to determine the intermediate signal in step (c), and an interference signal may be determined for the remaining microphones. So, for this configuration, the method step (c) would be expressed as "Determining an intermediate signal based on at least one microphone signal", and method step (e) would have the wording "Determining an interference signal for each of the at least two microphones as a difference signal based on the echo-reduced signal and the microphone signal, wherein the signal of the microphone is not used for the determination of the intermediate signal in step (c)".

The term "interference" describes signal components which are regarded as disturbing the wanted signal component. Interference may comprise an echo signal component and/or a noise signal component. An echo signal is emitted by an echo source such as a loudspeaker, e.g. from a handsfree system. Examples for noise signals comprise the noise of an engine, e.g. in a vehicular cabin, or wind noises. The echo signal component may be explicitly known.

The provided method solves the above problem by introducing an echo-reduced signal in step (d) and subsequently using it to determine an interference signal for at least one microphone in step (e) and using these interference signals for determining the output signal with reduced interference in step (f). In this way, no interfering echo signals can disturb the processes of determining the interference signal for the microphones and of determining the output signal with reduced interference.

The method determines the echo-reduced signal in step (d) based on an intermediate signal. An intermediate signal is determined before in step (c) from at least one microphone signals. Therefore, it is possible to determine one intermediate signal and thus, execute the method with only one unit for determining the echo-reduced signal from the intermediate signal independently of the number of microphones

The term "microphone signal" is meant to describe the electrical signal which is output by a microphone in reaction to a sound signal (also called an acoustic signal) being transformed by the microphone.

In step (f), determining an output signal with reduced interference may be additionally based on at least one of the echo signal components. So, it may be possible to explicitly take into account the presence of the echo signals in this step as well.

Considering the presented method, it has to be understood that the steps of the method may be executed automatically and may act on digital signals. In particular, the method may be executed on a computer. Each step may be executed in the time and/or the frequency domain. The wanted signal may particularly comprise a speech signal. The speech signal may be issued by a speaker in the vicinity of the at least one microphone. The at least one echo source may be at least one loudspeaker. The sound of the at least one loudspeaker can be received by at least one of the microphones.

The invention may be particularly applied to the problem of determining the speech signal of a human speaker with reduced interference. The speaker may use a hands-free telephone kit and/or a system providing speech control for some device. The room around the speaker may be filled with other voice signals, particularly with the response of a remote communication partner emitted via loudspeakers. Such a scenario may particularly apply to the case of a speaker in a vehicular cabin.

At least two of the microphones may be arranged as a microphone array.

At least two microphones can be arranged in an array. By employing a microphone array, it becomes possible to provide an intermediate signal in step (c) where the wanted signal component is already emphasized in comparison to the microphone signals. Further, the signals received by the microphones may be processed in such a way that signals from a source in a preferred direction may be emphasized.

The step (c) may comprise determining the intermediate signal based on the output of a beamformer, in particular, of an adaptive beamformer.

Beamforming is a signal processing technique which is used with arrays of microphones for the purpose of increasing the receiving sensitivity in the direction of preferred signal sources and decreasing the sensitivity in all other directions. Beamforming involves combining the signal from each of the microphones delayed by slightly different times to account for the different times which it takes the sound from a signal source in a preferred direction to arrive at each microphone, thus making one strong signal, as if the signal came from a single, very sensitive microphone directed to the preferred signal sources. So, in preferred directions, the wanted signal is particularly strong in comparison to diffuse noise or other sound sources located in other directions than the direction to the wanted signal sources. Therefore, with respect to sound sources in preferred directions, the output of a beamformer shows an increased ratio of wanted signal strength to the strength of unwanted signals like noise, resulting in an increased signal to noise ratio (SNR) for sources in the preferred directions.

Furthermore, the signal from each microphone may be amplified by a different weight to achieve a desired sensitivity pattern. While some (non-adaptive) beamformers use a fixed set of weightings and time shifts to combine the signals from the microphones, adaptive beamfomers are able to adapt their response automatically to different situations. Some criterion has to be set up to allow the adaptation to proceed such as minimizing the total interference output. In addition to delaying and weighting, the microphone signals or the combined signal may be modified by filters. The employed beamfomer may be of any type, particularly a Delay and Sum beamformer, or a LCMV (linearly constrained minimum variance) beamformer.

Beamformers are used in connection with microphone arrays, which have been described above as one possibility of executing the presented method.

The intermediate signal mentioned in step (c) may be based on, or, in particular, be the output of a beamformer or of an adaptive beamformer. So, the intermediate signal already shows an improved signal to noise ratio of the wanted signal with respect to components of noise and echo when compared to the output signal of a single microphone.

The step (b) may comprise, for each echo source, determining at least one echo source signal to be output by the echo source.

In particular, an echo source may be a loudspeaker. The sound signals emanated by all loudspeakers together generate the echo signal component when received by the at least one microphone.

The step (b) may comprise filtering, particularly, adaptively filtering, the at least one echo source signal.

By filtering the echo source signals, they may be prepared in such a way as to optimize cancelling the echo so that the echo signal estimate is not present anymore in the echo-reduced signal. This may be accomplished by using appropriate digital filters, such as filters with an finite impulse response (FIR) or with infinite impulse response (IIR). The filtering may take place in the time domain or in the frequency domain, and the filters may be implemented in software or hardware.

Adaptation of an adaptive filter may be accomplished such that interfering components, particularly echo signals, are minimized in the output signal, particularly the echo-reduced signal. The output signal may be taken as reference signal for the adaptive filter.

The at least one echo source signal may be more than one echo source signal and the step of determining an echo signal estimate may comprise providing a combined signal as echo signal estimate based on the echo source signals.

Particularly if more than one echo source is present, each of the echo source signals may possibly be weighted and/or be filtered separately, where the filtering may be an adaptive filtering. An adaptive filtering may be performed by at least one filter. The at least one filter may minimize the echo source signals in the echo-reduced signal. The filtered echo source signals may then be added to form the echo signal estimate, whereby the filtered signals may be weighted before they are added. Alternatively, the echo source signals may be added with or without weighting of the signals and without previous filtering to form the echo signal estimate.

The echo-reduced signal may be determined in step (d) as the output of an echo canceller, in particular, of an adaptive echo canceller.

In the present case, echo cancellation accomplished by an echo canceller may involve obtaining a loudspeaker signal that will appear, with some delay, as echo in the received microphone signal. Loudspeaker signal means the signal to be output by a loudspeaker. Once this echo is recognized in the microphone signal, it may be removed from the received microphone signal by subtracting an adapted version of the loudspeaker signal. This technique may be implemented using an electronic unit like a digital signal processor but may also be implemented in software. Particularly, an adaptive echo canceller may determine the echo signal estimate by obtaining the echo signals which are to be output by loudspeakers, filtering them in such a way that the echo will be minimized in the echo-reduced signal, and then combining the filtered signals to an echo signal estimate which is then subtracted from the intermediate signal.

The step (e) may comprise filtering the echo-reduced signal, particularly, adaptively filtering the signal.

The purpose of this step is to minimize the echo-reduced signal in the at least one interference signal. Therefore, the filtering may be particularly an adaptive filtering, and may be based on the respective interference signal. If interference signals are to be determined for more than one microphone, then the echo-reduced signal may be filtered separately for each microphone. Then, for each microphone the signal filtered for that microphone may be subtracted from the microphone signal of this microphone.

The above-mentioned steps of filtering are accomplished by filters as described above in connection with step (b).

Alternatively, for each microphone, the echo-reduced signal may be subtracted with or without weighting from the microphone signal without filtering to obtain the interference signal for this microphone.

The step (e) may comprise determining the interference signal as the output of a blocking matrix, in particular, of an adaptive blocking matrix.

The blocking matrix accomplishes the task of removing a given reference signal like the echo-reduced signal from a set of other signals. This results in a set of signals which are output by the blocking matrix and in which the reference signal has been suppressed. Different blocking technologies may be used to achieve the effect of blocking the echo-reduced signal in the signals obtained from the microphones; particularly, the adaptive blocking matrix may employ coefficient-constrained adaptive filters (CCAFs).

The method for processing at least one microphone signal to provide an output signal with reduced interference may further comprise the steps of:

    i) determining an estimate for a noise component in at least one microphone signal,

    ii) comparing the estimate for a noise component with the echo-reduced signal to determine the presence of a wanted signal component, and

    iii) controlling at least one of the steps (b) to (f) based on the result of the comparison of the estimate for noise to the echo-reduced signal.

By introducing these further method steps, time intervals may be detected when the microphone signals comprise a wanted signal component. Particularly if adaptive filtering is used in some of the method steps for providing the output signal with reduced interference, the quality of the adaptation depends on determining the presence of a wanted signal. If intervals can be identified when a wanted signal is present or absent, the quality of the adaptation and therefore the quality of determining the respective signals in the method steps may be improved. So, the further method steps i) to iii) introduced here particularly allow employing adaptive filtering in at least one of the method steps (a) to (f).

In the step i), the microphone signals may be more than one and determining an estimate for a noise component may comprise determining a difference signal between the signals of two, in particular neighbouring, microphones.

This is a method of providing an estimate for noise with small effort in the case when more than one microphone is used. Other methods to determine an estimate for a noise component in the at least one microphone signal may also be applied.

The step ii) of comparing the estimate for a noise component with the echo-reduced signal may comprise determining a quotient of the signal power of the echo-reduced signal divided by the signal power of the estimate for a noise component.

In this way, a measure is defined which can be determined automatically and thus offers the possibility to be executed by an apparatus. As the comparison is based on the echo-reduced signal, it can be more accurate than if it were based on the intermediate signal.

The step iii) of determining a quotient of the signal power of the echo-reduced signal divided by the signal power of the estimate for a noise component may comprise determining that a wanted signal component is present if the quotient is greater than a predetermined value.

Execution of this step allows the identification of the presence of a wanted signal component. This step may particularly be executed by some kind of controller, particularly by a voice activity detector. The controller may activate at least one of the beamformer, the blocking matrix, the echo canceller or the interference canceller in dependence on the quotient, thereby controlling an optimized adaptation of adaptive units. The predetermined value may be a constant or may be varying with time or frequency.

The steps i) to iii) may be performed by a voice activity detector.

The purpose of a voice activity detector is to provide an indication of speech presence as well as possibly providing delimiters for the begin and end of a speech segment. Voice activity detectors may be used following different principles of voice detection, with or without relying on a threshold level for the comparison between voice and noise. Methods of Voice Activity Detection may include or be based on ITU G.729(b), GSM 06.32, TIA EVRC or 3 GPP RS 26.094.

The step (f) may comprise providing the output signal as a difference signal based on the at least one interference signal and the intermediate signal.

The step (f) may comprise filtering the at least one interference signal, particularly, by adaptively filtering.

The purpose of the filtering is to minimize the at least one interference signal in the output signal with reduced interference. Filters as described in connection with step (b) may be used.

In step (f), the at least one interference signal may be more than one interference signal and the step may comprise providing a combined signal based on the interference signals.

Particularly if more than one interference signal is present, each of the interference signals may be filtered separately, where the filtering may be an adaptive filtering. Adaptive filtering may be based on the output signal with reduced interference. The filtered interference signals may be possibly weighted and then may be added to form the output signal with reduced interference. Alternatively, the interference signals may be added without weighting and/or without previous filtering to form the output signal with reduced interference.

The step (f) may comprise providing the output signal as a difference signal based on the at least one interference signal together with the at least one echo source signal, and the intermediate signal.

In this case, the echo source signals and the interference signals are both cancelled simultaneously from the intermediate signal, thus enabling the possibility of an enhanced cancelling process taking into account all the components to be removed.

The step (f) may comprise filtering the at least one interference signal and the at least one echo source signal, particularly, by adaptively filtering.

The purpose of the filtering is to simultaneously minimize the at least one interference signal and the at least one echo signal in the output signal with reduced interference. Therefore, the filtering, particularly the adaptive filtering, may be based on the output signal with reduced interference. Filters may be used as described in connection with step (b).

In step (f), the at least one interference signal and/or the at least one echo source signal may be more than one signal and the step may comprise combining the interference signals and the echo source signals into one signal.

Particularly if more than one interference signal and/or more than one echo signal is present, each of these signals may be filtered separately, where the filtering may be an adaptive filtering. An adaptive filtering may be based on the output signal with reduced interference. The filtered signals may be weighted and then added to form the output signal with reduced interference. Alternatively, the signals may be added without previous filtering and/or weighting to form the output signal with reduced interference.

In step (f), the output signal may be determined as the output of an interference canceller, in particular, of an adaptive interference canceller.

In particular, the output signal may be the output of an interference canceller. One alternative of an interference canceller may provide the possibility to receive and process at least one interference signal. A different alternative of an interference canceller may provide the possibility to receive at least one interference signal and to additionally receive at least one echo source signal and to process all the input signals. The interference canceller may receive other signals besides the at least one interference signal and be configured to process all of them. The interference canceller may be operating according to a variety of algorithms .

The complete method described above as well as particular steps of it may be executed by a computer.

The invention further provides a computer program product comprising one or more computer readable media having computer-executable instructions for performing the steps of one of the above-described methods when run on a computer.

Also, the invention provides an apparatus configured to process at least two microphone signals to provide an output signal with reduced interference, each microphone signal comprising a wanted signal component and an echo signal component resulting from at least one echo source, each microphone signal stemming from a microphone, the apparatus comprising:

  (a) an input configured to receive the at least two microphone signals,

(b) an input configured to determine an echo signal estimate,

(c) means configured to determine an intermediate signal based on at least one microphone signal,

(d) means configured to determine an echo-reduced signal as a difference signal of the echo signal estimate and the intermediate signal,

(e) means configured to determine an interference signal for at least one microphone as a difference signal based on the echo-reduced signal and the microphone signal, and

(f) means configured to determine an output signal with reduced interference based on the at least one interference signal and the intermediate signal.

The inputs and means provided by the invention are configured to perform the steps of the above described methods. In particular, an input configured to receive the at least two microphone signals and the means configured to determine an intermediate signal may form or be part of a beamformer, particularly an adaptive beamformer. Further, an input configured to determine an echo signal estimate and means configured to determine an echo-reduced signal may form or be part of an echo canceller, particularly an adaptive echo canceller. Means configured to determine an interference signal may form or be part of a blocking matrix, particularly an adaptive blocking matrix. Means configured to determine an output signal with reduced interference may form or be part of an interference canceller, particularly an adaptive interference canceller.

Further aspects of the invention will be described below with reference to the figures.

Figure 1 illustrates an example of an echo canceller combined with a blocking matrix to form an echo-transparent blocking matrix according to the invention.

Figure 2 presents an illustrative example for a technical design where an echotransparent blocking matrix is integrated into a GSC-Structure to form the GSC with echo-transparent blocking matrix.

Figure 3 illustrates the steps of the method for processing at least two microphone signals to provide an output signal with reduced interference.

Figure 4 is a line graph comparing the re-adaption process in the GSC with echotransparent blocking matrix (GSC EABM) and the GSAEC after an instantaneous change of the loudspeaker signal by 10 dB.

Figure 5 presents an example for a technical design where an echo-transparent blocking matrix is integrated into a GEIC structure.

Figure 6 shows the general form of a GSC structure used to optimize a sound signal obtained from at least one microphone.

Figure 7 displays an example for the technical design of a GSC employing adaptive filters.

In a scenario involving one embodiment of the invention, a speaker uses a hands-free telephone kit in an environment, where the signal of the far communication partner is emitted via a loudspeaker into the room around the speaker and so, at least one additional voice signal, called an echo signal, is present in the environment of the speaker. Even if noise as well as echoes are regarded as interference with respect to the wanted signal, in this embodiment the difference between noise and the echo signal is the fact that the echo signal is explicitly known. The known signal therefore may be used to compensate the echo signal component in the signal received by the microphones. This method, which is called "adaptive echo cancellation" (AEC), is further discussed in: E. Hänsler, G. Schmidt: Acoustic Echo and Noise Control: A Practical Approach, Wiley IEEE Press New York NY (USA), 2004)

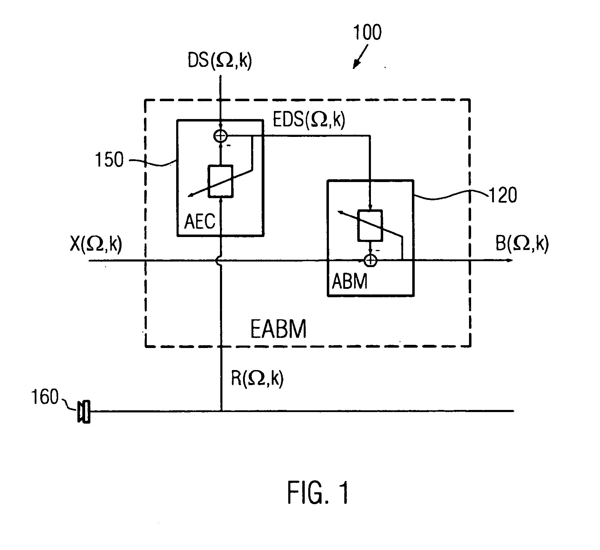

Figure **1** presents the general layout of an example of an echo-transparent blocking matrix **100** according to the present invention. To arrive at the new subsystem **100** as depicted in Figure 1, an echo canceller **150** is integrated into a GSC structure as an independent unit. The echo canceller is added with particular respect to its influence on the process of blocking the wanted signal by the blocking matrix **120.** Therein, the loudspeaker signal $R(\Omega,k)$ driving a loudspeaker **160** is taken as an echo signal estimate and is cancelled from the intermediate signal $DS(\Omega,k)$ by the adaptive echo canceller. Under ideal conditions, the output signal $EDS(\Omega, k)$ of the echo canceller, which also is the reference signal of the adaptive blocking matrix, does not contain echo signal components anymore. In that case, the output signals $B(\Omega,k)$ of the blocking matrix are identical to the microphone signals $X(\Omega,k)$ with respect to the echo signal components as no echo signal components can be subtracted by the blocking matrix **120,** i.e. the structure depicted in Figure 1 is "transparent" with respect to the echo signal components. For that reason, this substructure of an adaptive blocking matrix **150** with an echo canceller **120** set in front may be called an "echo-transparent blocking matrix" (EABM) **100.**

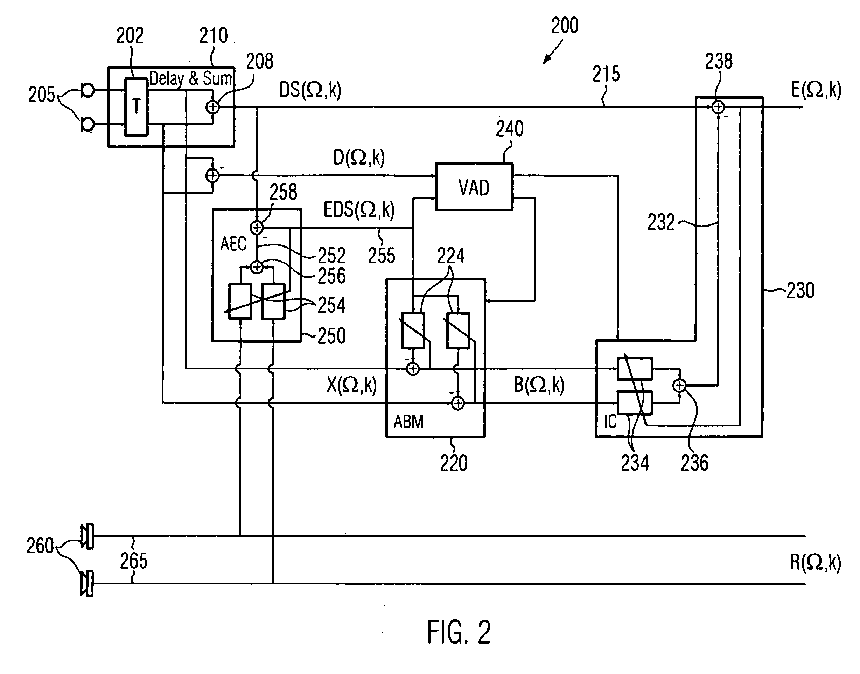

Figure **2** shows an example of how the echo-transparent blocking matrix **100** may be integrated into a GSC structure. The combined structure will be called GSC with echo-transparent blocking matrix **200.** It is particularly to be noted that the intermediate signal $DS(\Omega, k)$ (i.e. the output signal of the time-invariant beamformer **210**) is not modified by the operation of the echo-transparent blocking matrix **(220, 250)**. The activity of the blocking matrix **220** and the interference canceller **230** are controlled by a voice activity detector **240** which can distinguish between periods with and without a speech signal.

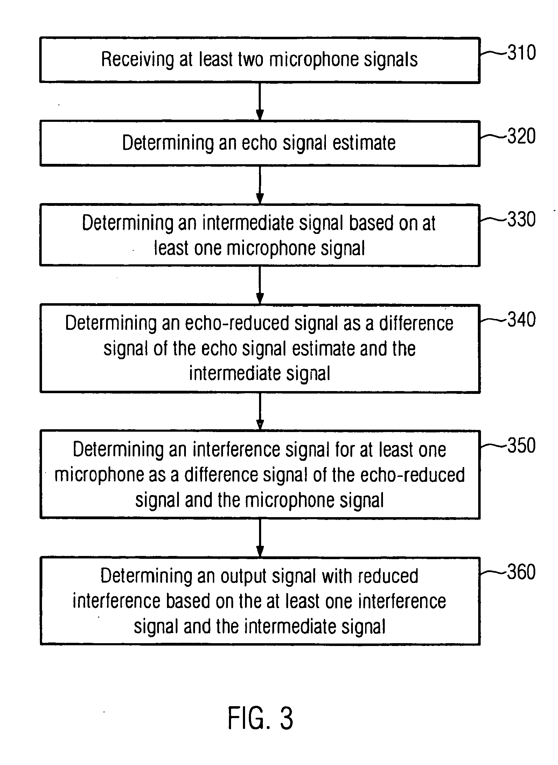

The operation of the GSC with echo-transparent blocking matrix structure to provide an output signal with reduced interference is described in the following with regard to Figure **3.** In step **310,** a sound signal is received by the at least two microphones **205.** The signal may comprise components of a wanted signal, probably a voice signal from a human speaker, and additional components of echo signals, probably voice signals emitted by loudspeakers **260** in the environment of the microphones. The loudspeakers may receive their driving electrical signal $R(\Omega,k)$ via lines **265.** Furthermore, noise may be received by the at least two microphones **205.**

In step **320**, an estimate may be determined for the echo signals. To that purpose, each of the signals $R(\Omega,k)$ driving the loudspeakers may be adaptively filtered by the filters **254.** The filtered results are than added up by unit **256.** The resulting signal in line **252** is taken as the desired estimate for the echo signal in the following steps.

In step **330,** the signals from the at least one microphone **205** may be delayed by some amount to account for the different distances between the at least one microphone and the source of the wanted signal in unit **202.** Additionally, the signals may be filtered in unit **202.** The processed signals are combined in unit **208.** After processing the microphone signals in this way, an intermediate signal $DS(\Omega,k)$ wherein the signal to noise ratio is already increased with respect to the wanted signal is available for use in the following steps.

Then, in step **340,** the echo may be reduced in the intermediate signal. Therefore, the estimate for the echo signal in line **252** from step **310** is subtracted from the intermediate signal $DS(\Omega,k)$ from step **330** using unit **258** in the echo canceller **250.** The resulting difference signal $EDS(\Omega,k)$ is then conducted via line **255** to the blocking matrix **220** and the voice activity detector **240.** $EDS(\Omega,k)$ now has an even more increased signal to noise ratio in comparison to the intermediate signal $DS(\Omega,k)$.

The echo-reduced signal $EDS(\Omega,k)$ may then be used as input signal for the blocking matrix **220** in step **350**. In this step, the echo-reduced signal $EDS(\Omega,k)$ is removed from each of at least one of the microphone signals. First, $EDS(\Omega,k)$ is filtered separately by the filters **224** for each microphone in question so that it can be removed to an extent as large as possible from the corresponding microphone signal $X(\Omega,k)$. Then, the filtered echo-reduced signal $EDS(\Omega,k)$ are subtracted from the corresponding microphone signal $X(\Omega,k)$. The result is, for each microphone in question, an interference signal $B(\Omega,k)$. As the echo-reduced signal $EDS(\Omega,k)$ mainly comprises the wanted signal, the interference signals $B(\Omega,k)$ will comprise most of the noise and of the echo components as delivered by the microphones.

In the final step **360,** the interference signals $B(\Omega,k)$ may be removed from the intermediate signal $DS(\Omega,k)$ by the interference canceller **230.** For that purpose, each of the Interference signals $B(\Omega,k)$ is filtered in units **234** so that most of $B(\Omega,k)$ may be reduced from the intermediate signal $DS(\Omega,k)$. The filtered signals are possibly weighted and then combined in unit **236.** The resulting signal is conducted via line **232** to unit **238,** where it is subtracted from $DS(\Omega,k)$. So, most of the noise and most of the echo is removed from a signal which has already an increased signal to noise ratio with respect to the wanted signal. The resulting output signal with reduced interference $E(\Omega,k)$ consequently has strongly reduced noise and echo signals.

In one embodiment, the intermediate signal may be determined in step **330** based on the signals of all the at least two microphones. This may be particularly the case if the microphone signals are used as input to a beamformer, and the intermediate signal is based on the output of the beamformer. In this embodiment, an interference signal is determined according to step **350** for all of the at least two microphones. In another embodiment, only some of the at least two microphones are used in step **330** to determine the intermediate signal, while for the remaining microphones whose signals are not used in step **330 ,** an interference signal is determined in step **350.**

As can be seen from the description of the GSC with echo-transparent blocking matrix **200,** the echo canceller **250** lends its functionality to the system but acts in the background. The optimization realized in the GSC-Structure **200** by the blocking matrix **250** now does not take into account the echo signal anymore. Therefore, the interference canceller **230** has to simulate just the time-invariant beamformer **210** to remove the echo signal components from the intermediate signal $DS(\Omega,k)$ . So, the interference canceller **230** now performs the desired common optimization of the echo cancellation and the reduction of noise. Independently of the number of microphones, only one echo canceller **250** is needed.

In the GSC structure, the filter of the blocking matrix is supposed to solely adapt to the wanted signal as only the wanted signal shall be suppressed in the microphone signals. Therefore, echo components in the reference signal $EDS(\Omega,k)$ of the blocking matrix **220** must be understood as disturbance for the algorithm of optimizing the filtering process. For that reason, the echo cancellation in $EDS(\Omega,k)$ has a positive effect to the process of optimizing the filters of the blocking matrix **220,** because it reduces interference by echo signals in $EDS(\Omega,k)$. By optimizing the filters of the blocking matrix **220** in this improved way, the wanted signal component can be blocked more effectively in the output of the blocking matrix **220.** As a consequence, the undesirable effect of suppressing the wanted signal in the output $E(\Omega,k)$ of the interference canceller **230** is reduced.

Embodiments of the GSC with echo-transparent blocking matrix can adapt more quickly to changes in the system of loudspeaker, surrounding room and the microphones (LRM-System). As it is a goal of echo cancellation to suppress acoustic feedback of the loudspeaker signal $R(\Omega,k)$ into the microphones **205,** the transmission path which is taken by the loudspeaker signal after emission from the loudspeaker **260** has to be modelled digitally. The system to be modelled is a LRM-System. A LRM-System is usually described by a linear filter of the order N. As temporal changes of the LRM-system occur frequently in practical applications of voice control systems, i.e. as the LRM-system is time variant, adaptive filters are employed to be able to track the changes. A relevant quality feature of a system for echo cancellation is the time it takes until the system is adapted again in an optimal way after a change to the system has occurred.

By employing the echo-transparent blocking matrix, an improvement may be obtained in comparison to the conventional process. The re-adaptation following a change (e.g. a leap in the level of the loudspeaker signal) is faster as the echo canceller **250** is not inserted directly into the path **215** of the primary signal of the interference canceller **230.** This acceleration is caused by the fact that the echo canceller **250** does not operate on the primary signal $DS(\Omega,k)$ of the interference canceller **230** like in the already known system of GSAEC, but affects the excitation signals $B(\Omega,k)$ of the interference Canceller **230.** Thus, the adaptive filters of the interference canceller **230** may scale the effect of the echo canceller **250.** The echo canceller **250** usually adapts slowly to changes in the sound field. If the echo canceller **250** is misaligned as the consequence of a room change, then, by reducing the absolute values of the filter weights in the (comparably quick) interference canceller **230,** a temporary (possibly) negative effect of the echo canceller **250** can be reduced or can even be completely compensated in the output signal $E(\Omega,k)$. So, the GSC with echo-transparent blocking matrix offers an increased robustness against room changes.

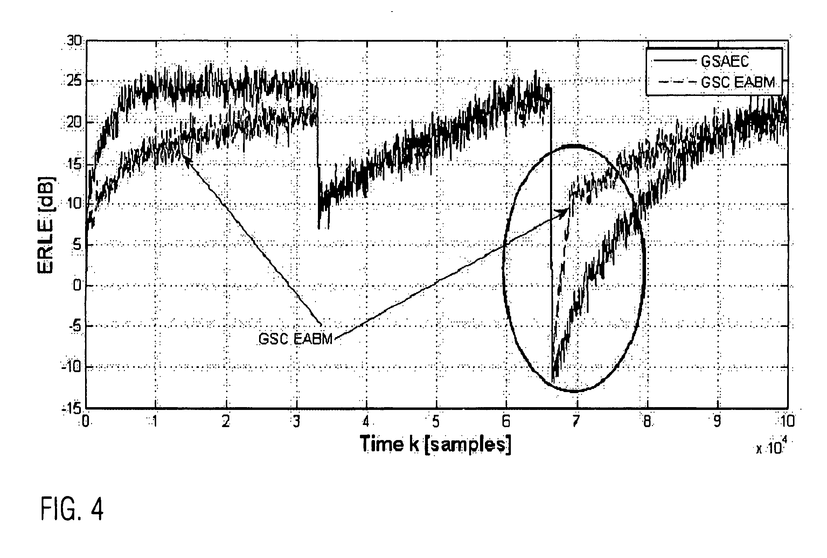

An example of this behaviour is shown in Figure **4.** Depicted is the echo attenuation (ERLE), i.e. a measure of how much the reproduction of the wanted signal is disturbed by echoes, versus time. Higher values for the attenuation mean a smaller disturbance by echoes. The marked area compares the re-adaptation behaviour in the case of a room change described by the curve for a GSAEC (lower curve) and the curve for a GSC with echo-transparent blocking matrix (GSC EABM, upper curve). In the marked area, the reaction is compared following an instantaneous decrease of the echo signal from a loudspeaker by 10 db. This implies a change in the loudspeaker-room-microphone system. It can be seen that the upper curve describing the reaction of the GSC with echo-transparent blocking matrix is at high values again in a shorter time than the lower curve for a GSAEC system. So, employing a GSC with echo-transparent blocking matrix in fact leads to an accelerated re-adaptation in the case of room changes.

The GSC with echo-transparent blocking matrix structure **200** maintains flexible adaptation to the sound field even if the echo canceller **250** has filters of high order to account for echoes with reverberation. The length of the filter for adaptive echo cancellation has to be chosen depending on the reverberation time of the environment in which the system is employed. Typically, much more than 1000 filter coefficients are adapted here. The adaptive filter is correspondingly slow. However, the filters of the beamformer should be chosen as short as possible to enable the beamformer to follow the changes of the blocking matrix **220** as well as to react to changes in the sound field quickly. So, the GSC with echo-transparent blocking matrix structure allows to integrate an echo canceller **250** of the required length into a quick and flexible beamformer. The order of the filters in the interference canceller **230** may be chosen small, allowing flexible reaction to the sound field, but the echo is suppressed according to the "large" echo canceller **250.**

Integrating the echo canceller **250** offers an improved detection of wanted speech signals. It is important that the adaptation of blocking matrix **220** and interference canceller **230** are carried out at appropriate times, i.e. at the presence of a wanted signal in the case of the blocking matrix **220,** and at the absence of the wanted signal in the case of the interference canceller **230.** To ensure a correct adaptation, the voice activity detector **240** controls the process of adaptation. To detect the presence of speech, a comparison may be carried out between the power of the signal $DS(\Omega,k)$ from the Delay and Sum output of the beamformer $S_{DSDS}(\Omega,k)$ and the signal power of the difference signal $D(\Omega, k)$ between two neighboring microphone signals $S_{DD}(\Omega,k)$, representing a simple form of blocking of the wanted signal: As such a signal has a spatial zero point in its directional characteristic, sound received by the array from that direction is effectively suppressed. To carry out the comparison, the measure of

$$M(\Omega,k) = \frac{S_{DSDS}(\Omega,k)}{S_{DD}(\Omega,k)},$$

where $\Omega$ marks the (normalized) frequency and k marks the discrete time, can be determined. By introducing a threshold value, the presence of speech activity can be determined from that measure. Signals from the preferred direction are mostly suppressed in the difference signal $D(\Omega,k)$ of the neighboring microphones resulting in small values of $S_{DD}(\Omega,k)$ for that direction, whereas the beamformer **210** emphasizes these signals. If signals from other directions are received, $S_{DSDS}(\Omega,k)$ and $S_{DD}(\Omega,k)$ balance out each other. For that reason, the quo-

tient $M(\Omega,k)$ assumes large values if signals from the preferred direction are received. For signals from other directions, $M(\Omega,k)$ will assume values of about 1.

By the introduction of the echo-transparent blocking matrix, the algorithm may be modified as follows: The echo-reduced signal $EDS(\Omega,k)$ of the time-invariant beamformer **210** may be used in the measure $M(\Omega,k)$ as introduced above instead of the signal $DS(\Omega,k)$ to detect voice activity in the preferred direction of the beamformer. Thus, the measure $M(\Omega,k)$ may be changed to

$$\tilde{M}(\Omega,k) = \frac{S_{EDSEDS}(\Omega,k)}{S_{DD}(\Omega,k)}.$$

As in $\tilde{M}(\Omega,k)$ the interfering echo components have been removed only from the enumerator in comparison to $M(\Omega,k)$, $\tilde{M}(\Omega,k)$ is more sensitive to the presence of the wanted signal. In $M(\Omega,k)$, interfering echo signals only influence the denominator, thereby increasing the minimum value of $(\Omega,k)$ in comparison to $M(\Omega,k)$ when an echo signal is present, thus increasing the dynamic range. A positive effect is obtained for the reason that, by determining the signal power of the difference between two neighboring microphone signals in $S_{DD}(\Omega,k)$, all signal components, particularly the echo signal components, are spatially filtered, i.e. echo signal components from the direction of the speaker are not part of the denominators in both $M(\Omega,k)$ and $\tilde{M}(\Omega,k)$. In contrast to that, in the enumerator of $M(\Omega,k)$, the echo components from the speaker's direction cause a reduced power distance between wanted signal to echo signal and thereby disturb the mechanism of detection. Because echo components from the speaker's direction do not influence the denominators, the echo signal components from the speaker's direction in $M(\Omega,k)$ cannot be compensated. Without countermeasures, the echo signal components from the speaker's direction would thus promote erroneous detections of a wanted speech signal. So, by compensating the acoustic echo signals in the enumerator of $\tilde{M}(\Omega,k)$, a more robust detection of a wanted speech signal is achieved.

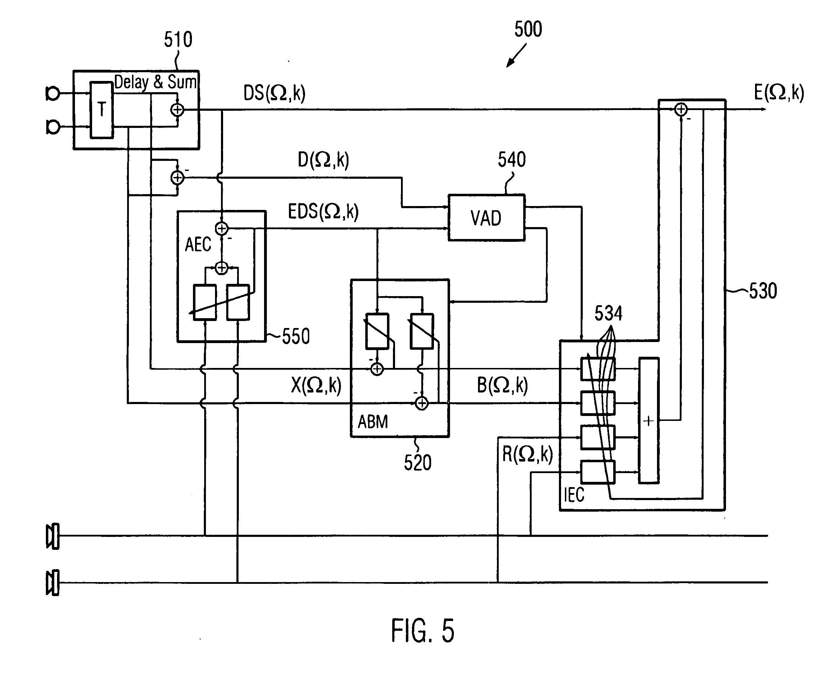

A further embodiment of the invention is shown in Figure **5.** Here, an echo-transparent blocking matrix is integrated into as structure called GEIC, which is known from: Herbordt et al.: Joint optimization of LCMV beamforming and acoustic echo cancellation for automatic speech recognition, Proc. IEEE Int. Conf. Acoust., Speech, Signal Processing (ICASSP-05), Philadelphia (USA), Vol. 3, pp. 77-80, May 2005. Echo canceller and the blocking matrix in the embodiment of Figure **5** are configured analogously to the embodiment of Figure 3, but the difference lies in the employment of different interference cancellers. The interference canceller **530** of the GEIC, called IEC, strives at a joint optimization of its adaptive filters **534** with respect to the excitation signals $B(\Omega,k)$ received from the blocking matrix **520** and with respect to the echo signals $R(\Omega,k)$ at the same time.

The GEIC structure may gain benefits from the integration of an echo-transparent blocking matrix as well. The advantages mentioned in connection with the embodiment of Figure **2** also apply to this embodiment. In particular, the optimization by the blocking matrix **520** is improved as the interfering echo signal component is removed from its reference signal $EDS(\Omega, k)$. Further, not the echo canceller **550** but only the interference canceller **530** operates on the primary signal $DS(\Omega,k)$ like in the case of Figure 2, thus providing the possibility for quick re-adaptation to room changes by changing the filter weights for filters **534** in the interference canceller **530** (called IEC in this case) like in the embodiment discussed in connection with Figure **2.** The combination of echo-transparent blocking matrix and GEIC also offers the possibility to employ an echo canceller **550** with a large number of filter coefficients and at the same time preserving flexible reaction to room changes by combining it with a quick beamformer. And the improved detection of voice activity by removing the echo signals from the input $EDS(\Omega,k)$ of the voice activity detector **540** is also shown in this embodiment.

It is to be understood that the different parts and components of the method and apparatus described above can also be implemented independent of each other and be combined in different form. Furthermore, the above described embodiments are to be construed as exemplary embodiments only.

## Claims

1. Method for processing at least two microphone signals to provide an output signal with reduced interference, each microphone signal comprising a wanted signal component and an echo signal component resulting from at least one echo source (260), each microphone signal stemming from a microphone (205), the method comprising the steps of:

   (a) receiving the at least two microphone signals,
   (b) determining an echo signal estimate,
   (c) determining an intermediate signal based on at least one microphone signal,
   **characterized by**
   further comprising the steps of:
   (d) determining an echo-reduced signal as a difference signal of the echo signal estimate and the intermediate signal,
   (e) determining an interference signal for at least one microphone as a difference signal based on the echo-reduced signal and the microphone signal,
   (f) determining an output signal with reduced interference based on the at least one interference signal and the intermediate signal.

2. Method according to claim 1, wherein at least two microphones (205) are arranged as a microphone array.

3. Method according to one of the preceding claims, wherein step (c) comprises determining the intermediate signal based on the output of a beamformer (210), in particular, of an adaptive beamformer.

4. Method according to one of the preceding claims, wherein step (b) comprises, for each echo source (260), determining at least one echo source signal to be output by the echo source.

5. Method according to claim 4, wherein step (b) comprises filtering the at least one echo source signal, particularly, by adaptively filtering.

6. Method according to claims 4 or 5, wherein the at least one echo source signal is more than one echo source signal and step (b) comprises providing a combined signal as echo signal estimate based on the echo source signals.

7. Method according to one of the preceding claims, wherein the echo-reduced signal is determined as the output of an echo canceller (250), in particular, of an adaptive echo canceller.

8. Method according to one of the preceding claims, wherein step (e) comprises filtering the echo-reduced signal, particularly, adaptively filtering.

9. Method according to one of the preceding claims, wherein step (e) comprises determining the interference signal as the output of a blocking matrix (220), in particular, of an adaptive blocking matrix.

10. Method according to one of the preceding claims, further comprising the steps of:

    (i) determining an estimate for a noise component in at least one microphone signal,
    (ii) comparing the estimate for a noise component with the echo-reduced signal to determine the presence of a wanted signal component,
    (iii) controlling at least one of the steps of (b) to (f), based on the result of the comparison of the estimate for noise to the echo-reduced signal.

11. Method according to claim 10, wherein the at least one microphone signal is more than one and determining an estimate for a noise component comprises determining a difference signal between the signals of two, in particular neighbouring, microphones (205).

12. Method of claims 10 to 11, wherein the step of comparing the estimate for a noise component signal with the echo-reduced signal comprises determining a quotient of the signal power of the echo-reduced signal divided by the signal power of the estimate for a noise component.

13. Method according to claim 12, comprising determining that a wanted signal component is present if the quotient is greater than a predetermined value.

14. Method according to one of the claims 10 to 13, wherein the steps (i) to (iii) are performed by a voice activity detector (240).

15. Method according to one of the preceding claims, wherein step (f) comprises providing the output signal as a difference signal based on the at least one interference signal and the intermediate signal.

16. Method according to claim 15, wherein step (f) comprises filtering the at least one interference signal, particularly, by adaptively filtering.

17. Method according to claims 15 or 16, wherein the at least one interference signal is more than one interference signal and step (f) comprises providing a combined signal based on the interference signals.

18. Method according to one of claims 1 to 14, wherein step (f) comprises providing the output signal as a difference signal based on the at least one interference signal together with the at least one echo source signal, and the intermediate signal.

19. Method according to claim 18, wherein step (f) comprises filtering the at least one interference signal and the at least one echo source signal, particularly, by adaptively filtering.

20. Method according to claims 18 or 19, wherein the at least one interference signal and/or the at least one echo source signal is more than one signal and step (f) comprises combining the interference signals and the echo source signals into one signal.

21. Method according to one of the preceding claims, wherein the output signal is determined as the output of an interference canceller (230, 530), in particular, of an adaptive interference canceller.

22. Computer program product comprising one or more computer readable media having computer-executable instructions for performing the steps of the method of one of the preceding claims when run on a computer.

**23.** Apparatus configured to process at least two microphone signals to provide an output signal with reduced interference, each microphone signal comprising a wanted signal component and an echo signal component, resulting from at least one echo source (560); each microphone signal stemming from a microphone (505), the apparatus comprising:

(a) an input configured to receive the at least two microphone signals,
(b) an input configured to determine an echo signal estimate,
(c) means (210) configured to determine an intermediate signal based on at least one microphone signal,
**characterized by**
further comprising:
(d) means (250) configured to determine an echo-reduced signal as a difference signal of the echo signal estimate and the intermediate signal,
(e) means (220) configured to determine an interference signal for at least one microphone as a difference signal based on the echo-reduced signal and the microphone signal, and
(f) means (230) configured to determine an output signal with reduced interference based on the at least one interference signal and the intermediate signal.

**Patentansprüche**

**1.** Verfahren zum Verarbeiten wenigstens zweier Mikrofonsignale zur Bereitstellung eines Ausgabesignals mit verringertem Störgeräusch, wobei jedes Mikrofonsignal eine gewünschte Signalkomponente und eine Echosignalkomponente, die aus wenigstens einer Echoquelle (260) stammt, umfasst, wobei jedes Mikrofonsignal aus einem Mikrofon (205) stammt, wobei das Verfahren die nachfolgenden Schritte umfasst:

(a) Empfangen der wenigstens zwei Mikrofonsignale
(b) Bestimmen einer Echosignalschätzung,
(c) Bestimmen eines Zwischensignals auf Grundlage wenigstens eines Mikrofonsignals,
**dadurch gekennzeichnet, dass**
es des Weiteren die nachfolgenden Schritte umfasst:
(d) Bestimmen eines echoverringerten Signals als Differenzsignal der Echosignalschätzung und des Zwischensignals,
(e) Bestimmen eines Störgeräusch-Signals für wenigstens ein Mikrofon als Differenzsignal auf Grundlage des echoverringerten Signals und des Mikrofonsignals,

(f) Bestimmen eines Ausgabesignals mit verringertem Störgeräusch auf Grundlage des wenigstens einen Störgeräusch-Signals und des Zwischensignals.

**2.** Verfahren nach Anspruch 1, wobei wenigstens zwei Mikrofone (205) als Mikrofonfeldanordnung angeordnet sind.

**3.** Verfahren nach einem der vorhergehenden Ansprüche, wobei Schritt (c) ein Bestimmen des Zwischensignals auf Grundlage der Ausgabe eines Strahlformers (210), insbesondere eines adaptiven Strahlformers, umfasst.

**4.** Verfahren nach einem der vorhergehenden Ansprüche, wobei Schritt (b) für jede Echoquelle (260) ein Bestimmen wenigstens eines Echoquellensignals zur Ausgabe durch die Echoquelle umfasst.

**5.** Verfahren nach Anspruch 4, wobei Schritt (b) ein Filtern des wenigstens einen Echoquellensignals, insbesondere durch adaptives Filtern, umfasst.

**6.** Verfahren nach Ansprüchen 4 oder 5, wobei das wenigstens eine Echoquellensignal mehr als ein Echoquellensignal ist und Schritt (b) ein Bereitstellen eines kombinierten Signals als Echosignalschätzung auf Grundlage der Echoquellensignale umfasst.

**7.** Verfahren nach einem der vorhergehenden Ansprüche, wobei das echoverringerte Signal als Ausgabe eines Echobeseitigers (250), insbesondere eines adaptiven Echobeseitigers, bestimmt wird.

**8.** Verfahren nach einem der vorhergehenden Ansprüche, wobei Schritt (e) ein Filtern des echoverringerten Signals, insbesondere ein adaptives Filtern, umfasst.

**9.** Verfahren nach einem der vorhergehenden Ansprüche, wobei Schritt (e) ein Bestimmen des Störgeräusch-Signals als Ausgabe einer Blockiermatrix (220), insbesondere einer adaptiven Blockiermatrix, umfasst.

**10.** Verfahren nach einem der vorhergehenden Ansprüche, des Weiteren umfassend die nachfolgenden Schritte:

(i) Bestimmen einer Schätzung für eine Rauschkomponente in wenigstens einem Mikrofonsignal,
(ii) Vergleichen der Schätzung für eine Rauschkomponente mit dem echoverringerten Signal zur Bestimmung des Vorhandenseins einer gewünschten Signalkomponente,
(iii) Steuern wenigstens eines der Schritte (b) bis (f) auf Grundlage des Ergebnisses des Vergleiches der Schätzung für das Rauschen mit dem echoverringerten Signal.

11. Verfahren nach Anspruch 10, wobei das wenigstens eine Mikrofonsignal mehr als eines ist und das Bestimmen einer Schätzung für eine Rauschkomponente ein Bestimmen eines Differenzsignals zwischen den Signalen zweier, insbesondere benachbarter, Mikrofone (205) umfasst.

12. Verfahren nach Ansprüchen 10 bis 11, wobei der Schritt des Vergleichens der Schätzung für ein Rauschkomponentensignal mit dem echoverringerten Signal ein Bestimmen eines Quotienten der Signalleistung des echoverringerten Signals, geteilt durch die Signalleistung der Schätzung für eine Rauschkomponente umfasst.

13. Verfahren nach Anspruch 12, umfassend ein Bestimmen, dass eine gewünschte Signalkomponente vorhanden ist, wenn der Quotient größer als ein vorbestimmter Wert ist.

14. Verfahren nach einem der Ansprüche 10 bis 13, wobei die Schritte (i) bis (iii) von einem Sprach- bzw. Stimmaktivitätsdetektor (240) durchgeführt werden.

15. Verfahren nach einem der vorhergehenden Ansprüche, wobei Schritt (f) ein Bereitstellen des Ausgabesignals als Differenzsignal auf Grundlage des wenigstens einen Störgeräusch-Signals und des Zwischensignals umfasst.

16. Verfahren nach Anspruch 15, wobei Schritt (f) ein Filtern des wenigstens einen Störgeräusch-Signals, insbesondere durch adaptives Filtern, umfasst.

17. Verfahren nach Ansprüchen 15 oder 16, wobei das wenigstens eine Störgeräusch-signal mehr als ein Störgeräusch-Signal ist und Schritt (f) ein Bereitstellen eines kombinierten Signals auf Grundlage der Störgeräusch-Signale umfasst.

18. Verfahren nach einem der Ansprüche 1 bis 14, wobei Schritt (f) ein Bereitstellen des Ausgabesignals als Differenzsignal auf Grundlage des wenigstens einen Störgeräusch-Signals zusammen mit dem wenigstens einen Echoquellensignal und des Zwischensignals umfasst.

19. Verfahren nach Anspruch 18, wobei Schritt (f) ein Filtern des wenigstens einen Störgeräusch-Signals und des wenigstens einen Echoquellensignals, insbesondere durch adaptives Filtern, umfasst.

20. Verfahren nach Ansprüchen 18 oder 19, wobei das wenigstens eine Störgeräusch-Signal und/oder das wenigstens ein Echoquellensignal mehr als ein Signal ist und Schritt (f) ein Kombinieren der Störgeräusch-Signale und der Echoquellensignale zu einem Signal umfasst.

21. Verfahren nach einem der vorhergehenden Ansprüche, wobei das Ausgabesignal als Ausgabe eines Störgeräusch-Beseitigers (230, 530), insbesondere eines adaptiven Störgeräusch-Beseitigers, bestimmt wird.

22. Computerprogrammerzeugnis, umfassend ein computerlesbares Medium oder mehrere computerlesbare Medien mit computerausführbaren Anweisungen zum Durchführen der Schritte des Verfahrens nach einem der vorhergehenden Ansprüche, wenn die Anweisungen auf einem Computer ausgeführt werden.

23. Vorrichtung, ausgelegt zum Verarbeiten wenigstens zweier Mikrofonsignale zur Bereitstellung eines Ausgabesignals mit verringertem Störgeräusch, wobei jedes Mikrofonsignal eine gewünschte Signalkomponente und eine Echosignalkomponente, die aus wenigstens einer Echoquelle (560) stammt, umfasst; wobei jedes Mikrofonsignal aus einem Mikrofon (505) stammt, wobei das Verfahren umfasst:

(a) eine Eingabe, die zum Empfangen der wenigstens zwei Mikrofonsignale ausgelegt ist,
(b) eine Eingabe, die zum Bestimmen einer Echosignalschätzung ausgelegt ist,
(c) Mittel (210), die zum Bestimmen eines Zwischensignals auf Grundlage wenigstens eines Mikrofonsignals ausgelegt sind,
**dadurch gekennzeichnet, dass**
sie des Weiteren umfasst:
(d) Mittel (250), die zum Bestimmen eines echoverringerten Signals als Differenzsignal der Echosignalschätzung und des Zwischensignals ausgelegt sind,
(e) Mittel (220), die zum Bestimmen eines Störgeräusch-Signals für wenigstens ein Mikrofon als Differenzsignal auf Grundlage des echoverringerten Signals und des Mikrofonsignals ausgelegt sind, und
(f) Mittel (230), die zum Bestimmen eines Ausgabesignals mit verringertem Störgeräusch auf Grundlage des wenigstens einen Störgeräusch-Signals und des Zwischensignals ausgelegt sind.

## Revendications

1. Procédé pour traiter au moins deux signaux de microphone afin de fournir un signal de sortie à interférence réduite, chaque signal de microphone comprenant une composante de signal souhaitée et une composante de signal d'écho produite par au moins une source d'écho (260), chaque signal de microphone provenant d'un microphone (205), le procédé comprenant les étapes consistant à :

(a) recevoir les au moins deux signaux de microphone,
(b) déterminer une estimation du signal d'écho,
(c) déterminer un signal intermédiaire sur base d'au moins un signal de microphone,
**caractérisé**
**en ce qu'**il comprend en outre les étapes consistant à :
(d) déterminer un signal à écho réduit comme signal de différence de l'estimation du signal d'écho et du signal intermédiaire,
(e) déterminer un signal d'interférence pour au moins un microphone comme signal de différence sur base du signal à écho réduit et du signal de microphone,
(f) déterminer un signal de sortie à interférence réduite sur base du au moins un signal d'interférence et du signal intermédiaire.

**2.** Procédé selon la revendication 1, dans lequel au moins deux microphones (205) sont agencés sous forme d'un réseau de microphones.

**3.** Procédé selon l'une des revendications précédentes, dans lequel l'étape (c) comprend la détermination du signal intermédiaire sur base de la sortie d'un formateur de faisceau (210), et en particulier d'un formateur de faisceau adaptatif.

**4.** Procédé selon l'une des revendications précédentes, dans lequel l'étape (b) comprend, pour chaque source d'écho (260), la détermination d'au moins un signal de source d'écho à sortir par la source d'écho.

**5.** Procédé selon la revendication 4, dans lequel l'étape (b) comprend le filtrage d'au moins un signal de source d'écho, et en particulier un filtrage adaptatif.

**6.** Procédé selon la revendication 4 ou 5, dans lequel l'au moins un signal de source d'écho est plus d'un signal de source d'écho et l'étape (b) comprend la fourniture d'un signal combiné comme estimation du signal d'écho sur base des signaux de source d'écho.

**7.** Procédé selon l'une des revendications précédentes, dans lequel le signal à écho réduit est déterminé comme étant la sortie d'un annuleur d'écho (250), et en particulier d'un annuleur d'écho adaptatif.

**8.** Procédé selon l'une des revendications précédentes, dans lequel l'étape (e) comprend le filtrage du signal à écho réduit, et en particulier un filtrage adaptatif.

**9.** Procédé selon l'une des revendications précédentes, dans lequel l'étape (e) comprend la détermination du signal d'interférence comme sortie d'une matrice de blocage (220), et en particulier d'une matrice de blocage adaptative.

**10.** Procédé selon l'une des revendications précédentes, comprenant en outre les étapes consistant à :

(i) déterminer une estimation pour une composante de bruit dans au moins un signal de microphone,
(ii) comparer l'estimation pour une composante de bruit avec le signal à écho réduit pour déterminer la présence d'une composante de signal souhaitée,
(iii) contrôler au moins une des étapes (b) à (f) sur base du résultat de la comparaison de l'estimation pour le bruit avec le signal à écho réduit.

**11.** Procédé selon la revendication 10, dans lequel l'au moins un signal de microphone est plus d'un signal et la détermination d'une estimation pour une composante de bruit comprend la détermination d'un signal de différence entre les signaux de deux microphones, et en particulier de deux microphones voisins (205).

**12.** Procédé selon la revendication 10 ou 11, dans lequel l'étape de comparaison de l'estimation pour un signal à composante de bruit avec le signal à écho réduit comprend la détermination d'un quotient de la puissance du signal à écho réduit divisée par la puissance de signal de l'estimation pour une composante de bruit.

**13.** Procédé selon la revendication 12, comprenant la détermination du fait qu'une composante de signal souhaitée est présente si le quotient est supérieur à une valeur prédéterminée.

**14.** Procédé selon l'une des revendications 10 à 13, dans lequel les étapes (i) à (iii) sont exécutées par un détecteur d'activité vocale (240).

**15.** Procédé selon l'une des revendications précédentes, dans lequel l'étape (f) comprend la fourniture du signal de sortie comme signal de différence sur base de l'au moins un signal d'interférence et du signal intermédiaire.

**16.** Procédé selon la revendication 15, dans lequel l'étape (f) comprend le filtrage d'au moins un signal d'interférence, et en particulier un filtrage adaptatif.

**17.** Procédé selon la revendication 15 ou 16, dans lequel l'au moins un signal d'interférence est plus d'un signal d'interférence et l'étape (f) comprend la fourniture d'un signal combiné basé sur les signaux d'interférence.

**18.** Procédé selon l'une des revendications 1 à 14, dans lequel l'étape (f) comprend la fourniture du signal de sortie comme signal de différence sur base d'au moins un signal d'interférence, conjointement avec l'au moins un signal de source d'écho, et du signal intermédiaire.

**19.** Procédé selon la revendication 18, dans lequel l'étape (f) comprend le filtrage de l'au moins un signal d'interférence et de l'au moins un signal de source d'écho, et en particulier un filtrage adaptatif.

**20.** Procédé selon la revendication 18 ou 19, dans lequel l'au moins un signal d'interférence et/ou l'au moins un signal de source d'écho est/sont plus d'un signal et dans lequel l'étape (f) comprend la combinaison des signaux d'interférence et des signaux de source d'écho en un seul signal.

**21.** Procédé selon l'une des revendications précédentes, dans lequel le signal de sortie est déterminé comme étant la sortie d'un annuleur d'interférence (230, 530), et en particulier d'un annuleur d'interférence adaptatif.

**22.** Produit logiciel comprenant un ou plusieurs supports lisibles par un ordinateur comportant des instructions exécutables par un ordinateur pour effectuer les étapes du procédé de l'une des revendications précédentes lorsqu'il est exécuté par un ordinateur.

**23.** Appareil configuré pour traiter au moins deux signaux de microphone pour fournir un signal de sortie à interférence réduite, chaque signal de microphone comprenant une composante de signal souhaitée et une composante de signal d'écho produite par au moins une source d'écho (560), chaque signal de microphone provenant d'un microphone (505), l'appareil comprenant :

（a) une entrée configurée pour recevoir les au moins deux signaux de microphone,
(b) une entrée configurée pour déterminer une estimation du signal d'écho,
(c) un moyen (210) configuré pour déterminer un signal intermédiaire sur base d'au moins un signal de microphone,
**caractérisé**
**en ce qu'**il comprend en outre :
(d) un moyen (250) configuré pour déterminer un signal à écho réduit comme signal de différence entre l'estimation du signal d'écho et le signal intermédiaire,
(e) un moyen (220) configuré pour déterminer un signal d'interférence pour au moins un microphone comme signal de différence sur base du signal à écho réduit et du signal de microphone, et
(f) un moyen (230) configuré pour déterminer un signal de sortie à interférence réduite sur base de l'au moins un signal d'interférence et du signal intermédiaire.

FIG. 1

FIG. 2

```
┌─────────────────────────────────────────────┐
│      Receiving at least two microphone signals │─310
└─────────────────────────────────────────────┘
                        │
                        ▼
┌─────────────────────────────────────────────┐
│         Determining an echo signal estimate    │─320
└─────────────────────────────────────────────┘
                        │
                        ▼
┌─────────────────────────────────────────────┐
│    Determining an intermediate signal based on at │─330
│           least one microphone signal          │
└─────────────────────────────────────────────┘
                        │
                        ▼
┌─────────────────────────────────────────────┐
│    Determining an echo-reduced signal as a difference │─340
│         signal of the echo signal estimate and the │
│                intermediate signal             │
└─────────────────────────────────────────────┘
                        │
                        ▼
┌─────────────────────────────────────────────┐
│    Determining an interference signal for at least one │─350
│   microphone as a difference signal of the echo-reduced │
│           signal and the microphone signal     │
└─────────────────────────────────────────────┘
                        │
                        ▼
┌─────────────────────────────────────────────┐
│    Determining an output signal with reduced   │─360
│   interference based on the at least one interference │
│           signal and the intermediate signal   │
└─────────────────────────────────────────────┘
```

FIG. 3

FIG. 4

EP 1 995 940 B1

FIG. 5

EP 1 995 940 B1

600

610                                    630

615

Fixed Beamformer                        Interference
                                        Canceller

620

Blocking Matrix          635

FIG. 6

FIG. 7

EP 1 995 940 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1633121 A1

- US 20050047611 A1

**Non-patent literature cited in the description**

- **M. BRANDSTEIN ; D. WARD.** Microphone arrays: signal processing techniques and applications. Springer Verlag, 2001
- **N. DAL DEGAN ; C. PRATI.** Acoustic noise analysis and speech enhancement techniques for mobile radio applications. *Signal Processing,* 1988, vol. 15, 43-56
- **L. GRIFFITHS.** Ch. Jim: An alternative approach to linearly constrained adaptive beamforming. *IEEE Trans. on Antennas and Propagation,* January 1982, vol. 30 (1), 27-34
- **S. HAYKIN.** Adaptive filter theory. Prentice Hall, 2002
- **E. HÄNSLER.** Statistische Signale. Springer Verlag, 2001

- **W.Herbordt ; H.Buchner ; W. Kellermann.** Computationally Efficient Frequency-Domain Combination of Acoustic Echo Cancellation and Robust Adaptive Beamforming. *Eurospeech 2001,* vol. 2, 1001
- **O. Hoshuyama ; A. Sugiyama ; A. Hirano.** A Robust Adaptive Beamformer for Microphone Arrays with a Blocking Matrix Using Constrained Adaptive Filters. *IEEE Transactions on Signal Processing,* October 1999, vol. 47 (10
- **E. HÄNSLER ; G. SCHMIDT.** Acoustic Echo and Noise Control: A Practical Approach. Wiley IEEE Press, 2004
- **HERBORDT et al.** Joint optimization of LCMV beamforming and acoustic echo cancellation for automatic speech recognition. *Proc. IEEE Int. Conf. Acoust., Speech, Signal Processing (ICASSP-05,* May 2005, vol. 3, 77-80